# EUROPEAN PATENT SPECIFICATION

(11) **EP 2 072 385 B1**
(45) Date of publication and mention of the grant of the patent: **15.09.2010**
(21) Application number: 08253958.6
(22) Date of filing: 10.12.2008
(51) Int. Cl.: B62D 57/032, B25J 5/00, B25J 13/08

(54) **Robot**
Roboter
Robot

(30) Priority: 10.12.2007 JP 2007318988
(43) Date of publication of application: 24.06.2009
(73) Proprietor: Honda Motor Co., Ltd., Minato-ku Tokyo 107-8556 (JP)
(72) Inventor: Neki, Norio, Wako-shi, Saitama 351-0193 (JP); Okazaki, Koji, Wako-shi, Saitama 351-0193 (JP); Nakayama, Takashi, Wako-shi, Saitama 351-0193 (JP); Muromachi, Masaaki, Wako-shi, Saitama 351-0193 (JP); Kaneko, Satoshi, Wako-shi, Saitama 351-0193 (JP); Kimura, Yuta, Wako-shi, Saitama 351-0193 (JP)
(74) Representative: Hague, Alison Jane

(56) References cited:
- EP-A- 1 457 294
- EP-A- 1 510 446
- EP-A- 1 795 437
- EP-A- 1 798 005
- EP-A- 1 819 026
- EP-A- 1 825 966
- EP-A- 1 847 449

## Description

The present invention relates to a robot which is capable of autonomously moving by the operation of a plurality of legs extending from a body.

There has been proposed a technique for carrying out charging of a battery mounted on an autonomously movable robot (refer to Japanese Patent Application Laid-Open No. 2007-245332). According to this technique, a reliable connection between a first connector provided for a body of the robot and a second connector that is owned by a charging installation is attained by moving the robot so as to be guided by a guide member on the side of a battery charge station.

Meanwhile, as a method of connecting the first connector and the second connector, in addition to the method in which the robot is moved relative to the charging installation, it may be possible to contemplate a method of driving the second connector by a drive provided for the charging installation so as to be brought close to the first connector in a state where the robot has been stopped.

However, in the second-mentioned method, the position or the like of the first connector may become inappropriate from a viewpoint of connection with the second connector because of the fact that the position, posture, or position and posture (hereinafter properly referred to as "position or the like") of the second connector undesirably deviates from its inherent or original position and the like, or for the reason that there are inconvenient factors, such as inclination of a floor, or existence of irregularities in a floor on which the robot is positioned even though the robot stops with a designated posture in a designated position (or the robot per se recognizes that it stops with a designated posture in a designated position). In this case, even if the robot is once moved to another position and is thereafter moved back to a designated position thereof, and has stopped with a designated posture in this designated position, the position or the like of the first connector may still remain unsuitable from a viewpoint of connection with the second connector. Additionally, when this moving distance becomes long, it is not preferable from a viewpoint of saving of consumption in energy of the robot.

Therefore, an object of at least preferred embodiments of the invention is to provide a robot capable of suitably adjusting the position or the like of its body on the current spot from a viewpoint of executing a designated task accompanied by the interaction with a target object.

The present invention is concerned with a robot which includes a body, a plurality of legs connected to the body via a first leg joint mechanism, respectively, and having a second leg joint mechanism, respectively, and a controller, the robot being autonomously movable with repetition of causing the plurality of legs thereof to leave from and arrive at a floor (it will be hereinafter referred to as "floor-leaving and "floor-arriving" throughout the present application) as the movement of a leg joint mechanism group including the first leg joint mechanism and the second leg joint mechanism is controlled by the controller. Such a robot is disclosed in EP-A-1825966.

A robot in accordance with a first aspect of the present invention is characterised in that the controller comprises a first control element which determines whether or not a second position/posture requirement is satisfied that the position and posture of the body fall within a second target position range and a second target posture range, respectively, which are defined from a viewpoint that the robot is urged to execute a designated task, in a state where the robot is in standstill in a second designated area which is an execution area of the designated task accompanied by an interaction thereof with a target object, and which, if the determination is that the second position/posture requirement is not satisfied, further determines whether or not a correction requirement is satisfied that the second position/posture requirement is satisfied by executing a correction such that the position and posture of the body may not exceed a variable position range and a variable posture range, respectively, which are defined from a viewpoint such that the robot is permitted to stably stand, depending on the movement of the leg joint mechanism group while the robot permits the plurality of legs to be kept arrived at a floor, and a second control element which controls the movement of the leg joint mechanism group to change the position, posture, or position and posture of the body while the plurality of legs are kept arrived at the floor, under a requirement that the first control element determines that the second position/posture requirement has not yet been satisfied and that the correction requirement is satisfied.

In accordance with the robot of the first aspect of the present invention, while the robot maintains each foot to keep a state of being arrived at the floor, the position or the like of the body is adjusted by controlling the movement of the leg joint mechanism group which comprises the first leg joint mechanism and the second leg joint mechanism, on a current spot of the robot, under a requirement that the "second position/posture requirement" is not satisfied. Accordingly, in a case where the position or the like of the body is inappropriate from a viewpoint of executing the designated task notwithstanding that the robot stops in the second designated area in order to execute the designated task, the robot can execute the designated task after the position or the like of the body has been corrected on the current spot in the second designated area. At this stage, the "movement" of respective of the joint mechanism technically means movements which are defined by a part of or all of translational movements in the directions of three axes and rotations about the three axes in a rectangular coordinate system. The "robot stops" technically means a state where the movements of all of the leg joint mechanisms which belong to the leg joint mechanism group are stopped.

Furthermore, the position or the like of the body is corrected by controlling the movement of the leg joint mechanism group on the current spot of the robot while the robot allows each foot to remain arrived at the floor, under a requirement such that it has been determined that the "correction requirement" is satisfied. Accordingly, the position or the like of the body can be appropriately corrected from the viewpoint of executing the designated task in the second designated area with each foot being kept arrived at the floor, while avoiding such a situation that the robot becomes unstable during standing thereof.

A robot in accordance with certain embodiments of the present invention is further characterized in that there is further provided a plurality of feet as floor-arriving portions of the plurality of legs, which are respectively connected to ends of the plurality of legs via a third leg joint mechanism, and the second control element controls the movement of the leg joint mechanism group including the third leg joint mechanism in addition to the first leg joint mechanism and the second leg joint mechanism.

In accordance with such robots, the position as well as the variable range of a posture of the body can be flexibly extended by moving the third leg joint mechanism in addition to the first leg joint mechanism and the second leg joint mechanism.

In certain embodiments of the present invention the second control element controls the movement of the leg joint mechanism group so as to be stopped again in the second designated area, after the robot has executed the floor-leaving and the floor-arriving of a part or all of the plurality of legs in the second designated area from a state where the robot keeps standstill thereof in the second designated area, under a requirement that the first control element determines that the second position/posture requirement and the correction element are not satisfied.

In accordance with such embodiments of the present invention, in a case where it has been determined that the "correction requirement" is not satisfied, that Is, in a case where a state where the standing of the robot may become unstable if the position or the like of the body is corrected on the current spot while the robot allows each foot to be kept arrived at the floor, the robot moves so as to perform stepping on the current spot thereof. In addition, the number of times of the floor-leaving and floor-arriving of the respective legs may be single time or multiple times, and may differ for respective legs. As a result, the position or the like of the body in the second designated area can be changed, so that the correction requirement may be satisfied. In addition, the position or the like of the body can be corrected In the second designated area with each foot being kept arrived at the floor to be appropriate from the viewpoint of executing the designated task, and avoiding a situation where the robot during standing thereof becomes unstable.

In certain embodiments the second control element controls the movement of the leg Joint mechanism group so that, after the robot has moved from the second designated area to another area, the robot is then moved to the second designated area to come to a standstill again there, under a requirement that the first control element has determined that the second position/posture requirement and the correction element are not still satisfied.

In accordance with such embodiments of the present invention, in a case where the "correction requirement" is not satisfied, the robot once moves from the second designated area to another area, and then moves back again to the second designated area, and comes to standstill there. As a result, the position or the like of the body in the second designated area can be changed so that the correction requirement may be satisfied. In addition, the position or the like of the body can be corrected in the second designated area with each foot being kept arrived at the floor to be appropriate from the viewpoint of executing the designated task, while avoiding a situation where the robot during standing thereof becomes unstable as mentioned above.

In certain embodiments the first control element determines whether or not a first position/posture requirement is satisfied that the position and posture of the body fall within a first target position range and a first target posture range, respectively, which are defined from a viewpoint such that the position and posture of the body are adjusted in advance in a first designated area so that an amount of correction of the position, posture, or the position and posture of the body in the second designated area may be reduced, in a state where the robot is in standstill in the first designated area different from the second designated area, and the second control element controls a movement of the leg Joint mechanism group so that the robot comes to standstill after the robot has moved from the first designated area to the second designated area, under a requirement such that the first control element has determined that the first position/posture requirement is satisfied.

In accordance with such embodiments the robot has moved to the second designated area from the first designated area, and then comes to stop there, under the requirement that the "first position/posture requirement" is satisfied. Accordingly, the position or the like of the body in the first designated area can be appropriately corrected in advance from the viewpoint that the robot reduces the amount of correction, such as the position of the body in the second designated area, and smoothly executes the designated task.

A robot in accordance with such embodiments may be further characterized in that the second control element controls the movement of the leg joint mechanism group so that, after the robot has executed the floor-leaving and floor-arriving of a part or all of the plurality of legs in the first designated area from a state where the robot is in standstill in the first designated area, under a requirement such that the first control element has determined that the first position/posture requirement is not still satisfied.

In accordance with such embodiments of robot, in cases where it has been determined that the "first position/posture requirement" is not satisfied, the robot operates so as to perform stepping on the current spot. Incidentally, the number of times of the floor-leaving and floor-arriving of the leg may be a single time or multiple times, and may differ for every leg. As a result, the robot can change the position or the like of the body in the first designated area so that the first position/posture requirement may be satisfied. Accordingly, when the robot has moved to the second designated area from the first designated area, the position or the like of the body in the first designated area can be appropriately corrected in advance from the viewpoint that the robot reduces the amount of correction, such as the position of the body in the first designated area, and smoothly executes the designated task.

In preferred embodiments of robot in accordance with the present invention there are further provided a battery and a first connector, and a task of connecting a second connector behaving as the target object and driven by a drive source provided for a charging installation, to the first connector, and of charging the battery by the charging installation, is executed as the designated task.

In such robots, In a case where the position or the like of the body is inappropriate notwithstanding that the robot keeps stopped in the second designated area, the designated task by which the second connector is connected to the first connector and the battery is charged by the charging installation can be executed after the robot corrected the position or the like of the body thereof on the current spot in the second designated area.

In certain embodiments of robot having these features a task of driving the second connector by the drive source of the charging installation in a state where the first and second connectors are connected together, thereby removing the second connector from the first connector, is executed as the designated task.

In accordance with such robots, in a case where the position or the like of the body is inappropriate notwithstanding that the robot stops in the second designated area, there is such an unfavorable possibility that the second connector is not removed from the first connector, the position or the like of the body of the robot changes with the movement of the second connector, and the standing state of the robot becomes unstable. Despite this, is should be appreciated that the robot can correct the position or the like of the body on the current spot in the second designated area as mentioned above. Accordingly, it is able to execute a designated task in which the second connector is surely removed from the first connector while avoiding an unfavorable situation such that the standing state of the robot becomes unstable because of the movement of the second connector.

In certain embodiments there is provided an arm articulated to the body via a first arm joint mechanism and capable of being bent and stretched by a second arm joint mechanism, and a hand articulated to an end of the arm via a third arm joint, whereby the robot executes a task of gripping the target object by the hand as the designated task.

In such robots, In a case where the position or the like of the body is inappropriate notwithstanding that the robot stops in the second designated area, such a designated task that the arm or the like is moved, and the target object is surely gripped by the hand can be executed after the robot corrected the position or the like of the body on the current spot in the second designated area.

In certain such embodiments a task of handing the target object gripped by the hand to a human being or another robot is executed as the designated task.

In accordance with such embodiments, in a case where the position or the like of the body is inappropriate notwithstanding that the robot stops in the second designated area, such a designated task that the arm or the like is moved, so that the target object gripped by the hand is handed to a human being or another robot can be executed after the robot corrected the position or the like of the body on the current spot in the second designated area.

An embodiment of the invention will now be described, by way of example only, with reference to the accompanying drawings, wherein:
FIG. 1 is a general perspective view illustrating the general construction of a robot according to an embodiment of the present invention;
FIG. 2 is a side elevational view illustrating general constructions of both a robot according to an embodiment of the present invention and a charging installation for execution of a designated task;
FIG. 3 is a perspective view, in part removed, illustrating the construction of a first connector;
FIG. 4 is a side view illustrating the general construction of the first connector and a second connector:
FIG. 5 is a perspective view illustrating the construction of the charging installation;
FIG. 6 is a schematic block diagram illustrating the construction of a controller of the robot according to an embodiment of the present invention;
FIG. 7 is a flow chart illustrating a position and posture control method by the robot according to an embodiment of the present invention;
FIG. 8 is a flow chart illustrating a method for executing a first designated task and a second designated task;
FIGS. 9 (a) through 9(c) are schematic views illustrating the operations performed by the robot according to an embodiment of the invention;
FIGS. 10(a) through 10(c) are schematic outside views illustrating a body position correction of the robot according to an embodiment of the present invention;
FIGS. 11(a) through 10(c) are schematic outside views illustrating a body posture correction of the robot according to an embodiment of the present invention;
FIGS. 12(a) and 12(b) are schematic outside views illustrating a disturbance on the body position/posture of the robot according to an embodiment of the present invention; and
FIGS. 13(a) through 13(c) are explanatory views illustrating diverse designated tasks to be executed by the robot according to an embodiment of the present invention.

An embodiment of a robot in accordance with the present invention will be described hereinbelow with reference to the accompanying drawings. First of all, the general construction of the robot will be described.

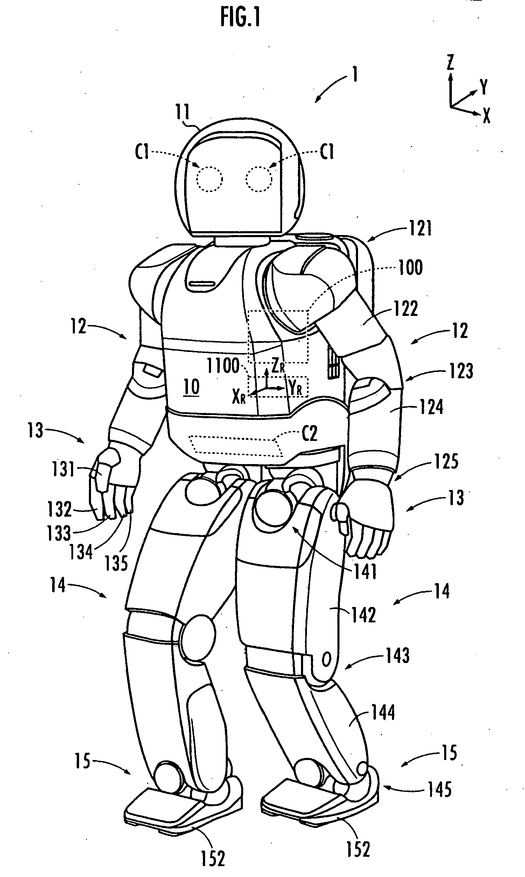

A robot 1 shown in FIG. 1 is a legged type mobile robot, and like a human being, includes a body 10, a head 11 arranged above the body 10, right and left arms 12 provided at an upper portion of the body 10 to extend from both upper sides, hands 13 provided respectively at the tips of the right and left arms 12, and right and left legs 14 provided to extend downward from a lower portion of the body 10. The robot 1 has a controller 100 which controls the operation thereof, and a battery 1100.

The body 10 is constituted by an upper portion and a lower portion which are mutually interconnected up and down so as to relatively rotate about a yaw axis. The head 11 can be moved to conduct a rotation about the yaw axis and so on with respect to the body 10. The head 11 is loaded with a pair of right and left head cameras C₁ which can sense light in various frequency bands, such as a CCD camera or an infrared camera which has the front of the robot 1 as an imaging range. A lower portion of the body 10 is loaded with a waist camera (active sensor) C₂ for detecting reflected light of a near-infrared laser beam from an article when the laser beam is emitted towards the lower front of the robot 1, to measure the position, orientation and the like of the article.

Each arm 12 includes a first arm link 122 and a second arm link 124. The body 10 and the first arm link 121 are movably connected together via a shoulder joint mechanism (a first arm joint mechanism) 121, the first arm link 122 and the second arm link 124 are movably connected to one another via an elbow joint mechanism (a second arm joint mechanism) 123, and the second arm link 124 and the hand 13 are movably connected together via a carpal joint mechanism (a third arm joint mechanism) 125. The shoulder joint mechanism 121 has rotational degrees of freedom about roll, pitch, and yaw axes, the elbow joint mechanism 123 has a rotational degree of freedom about the pitch axis, and the carpus joint mechanism 125 has rotational degrees of freedom about the roll, pitch, and yaw axes.

The hand 13 includes five finger mechanisms 131 to 135 which extend from a palm, and correspond to the thumb, forefinger, middle finger, ring finger, and a little finger, respectively, of a human being's hand. The first finger mechanism 131 and the four finger mechanisms 132 to 135 which are laterally arrayed are disposed to oppose to one another. The first finger mechanism 131 includes three link members respectively corresponding to a first metacarpal bone, and a proximal phalanx and a distal phalanx of the thumb in the human being's hand, and an elastic cover which covers the three link members. The three link members are connected together via joints respectively corresponding to a joint on the side of a base part of the first metacarpal bone and a metacarpophalangeal joint and an interphalangeal joint of the thumb, in the human being's hand sequentially from the palm. The first finger mechanism 131 can be bent in each joint according to a force transmitted from a motor housed in the palm via a power transmission mechanism constituted by a speed reduction mechanism, etc. The power transmitted to the first finger mechanism 131 from the motor is controlled by a controller 100. The finger mechanisms 132 to 135 are adapted to have an identical construction to the finger mechanisms disclosed, for example, in Japanese Patent Application Laid-Open No. 2003-181787, and are adapted to have almost the same construction as each other. For example, the fifth finger mechanism 135 includes three link members respectively corresponding to a proximal phalanx, a middle phalanx and a distal phalanx of the little finger of the human being's hand, and an elastic cover which covers the three link members. The three link members are connected together via joints respectively corresponding to a metacarpophalangeal joint, a proximal interphalangeal joint, and a distal interphalangeal joint of the little finger of the human being's hand sequentially from the palm. The fifth finger mechanism 135 can be bent inward in each joint according to the power transmitted from a motor (not shown) serving as a power source via a power transmission mechanism. The power transmitted to the fifth finger mechanism 135 from the motor is controlled by a controller 100 similarly to the first finger mechanism 131. Additionally, the power transmission mechanism may be constituted by a wire, a pulley and so on, as disclosed in the above-mentioned Japanese Patent Application Laid-Open No. 2003-181787, and all constructions that can transmit the power of a motor so as to bend and stretch each finger mechanism may be adopted.

Each leg 14 includes a first leg link 142, a second leg link 144, and a foot 15. The body 10 and the first leg link 142 are connected together via a hip joint mechanism (a first leg joint mechanism) 141, the first leg link 142 and the second leg link 144 are connected together via a knee joint mechanism (a second leg joint mechanism) 143, and the second leg link 144 and the foot 15 are moveably connected together via a foot joint mechanism (a third leg joint mechanism) 145. The hip joint mechanism 141 has rotational degrees of freedom about roll, pitch, and roll axes, the knee joint mechanism 143 has rotational degrees of freedom about the pitch axis, and the foot joint mechanism 145 has rotational degrees of freedom about roll and pitch axes. The hip joint mechanism 141, the knee joint mechanism 143, and the foot joint mechanism 145 constitute a "leg joint mechanism group." In addition, translational and rotational degrees of freedom of each joint mechanism included in the leg joint mechanism group may be changed suitably. Additionally, after one arbitrary joint mechanism of the hip joint mechanism 141, the knee joint mechanism 143, and the foot joint mechanism 145 is omitted, the leg joint mechanism group may be constructed by combinations of the two remaining joint mechanisms. Moreover, in a case where the leg 14 has a second leg joint mechanism separate from a knee joint, the leg joint mechanism group may be constructed so as to include the second leg joint mechanism. In order to relax the impact at the time of foot landing, the sole of the foot 15 is provided with an elastic material 152 as disclosed in Japanese Patent Application Laid-Open No. 2001-129774.

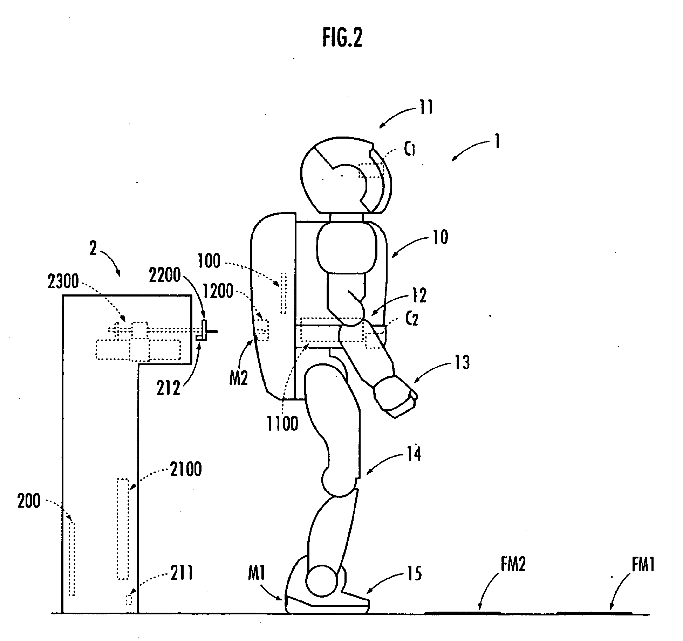

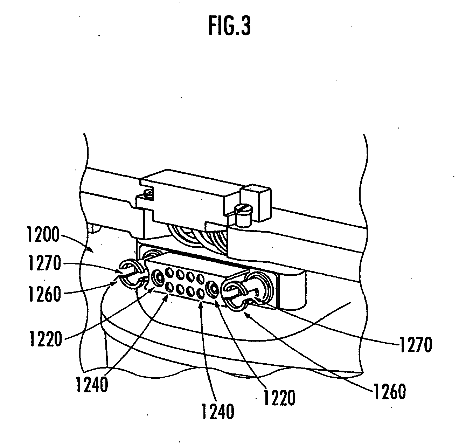

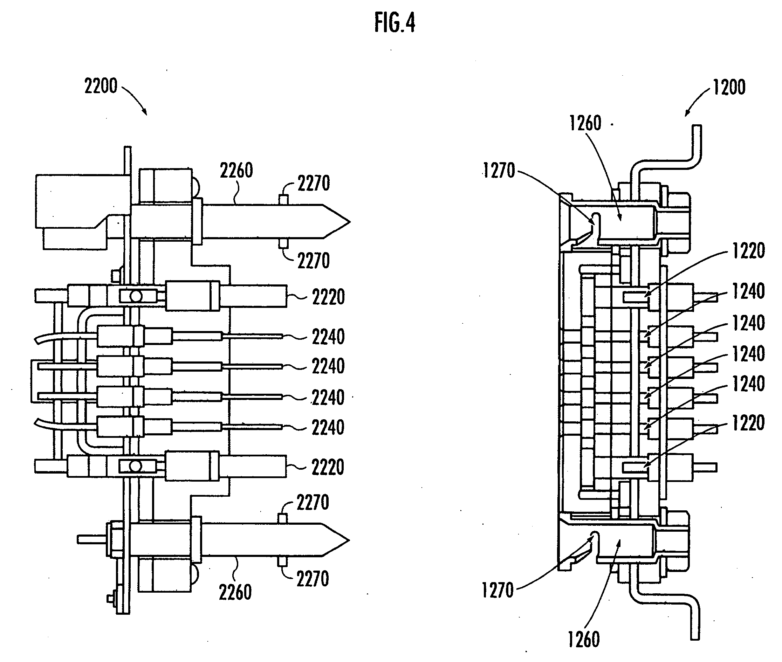

As shown in FIG. 2, a first connector 1200 for charging the battery 1100 is provided on the back side of the body 10. As shown in FIGS. 3 and 4, first charging terminals 1220, terminals 1240 for a first signal, and tubes 1260 are provided in parallel in the first connector 1200. A side wall of each tube 1260 is partially cut out, thereby forming guides 1270.

The robot 1 executes tasks, such as charging the battery 1100 by a charging installation 2 shown in FIG. 2. The charging installation 2 includes a power source 2100 for charging, a charge controller 200 which controls the operation of the charging installation 2, a second connector 2200, and a connector drive mechanism 2300. Additionally, the charging installation 2 includes a first sensor 211 which detects a first mark M₁ provided at a heel of the robot 1, using light, such as infrared light, and a second sensor 212 which detects a second mark M₂ provided at the back of the body 10 of the robot 1, using light, such as infrared light.

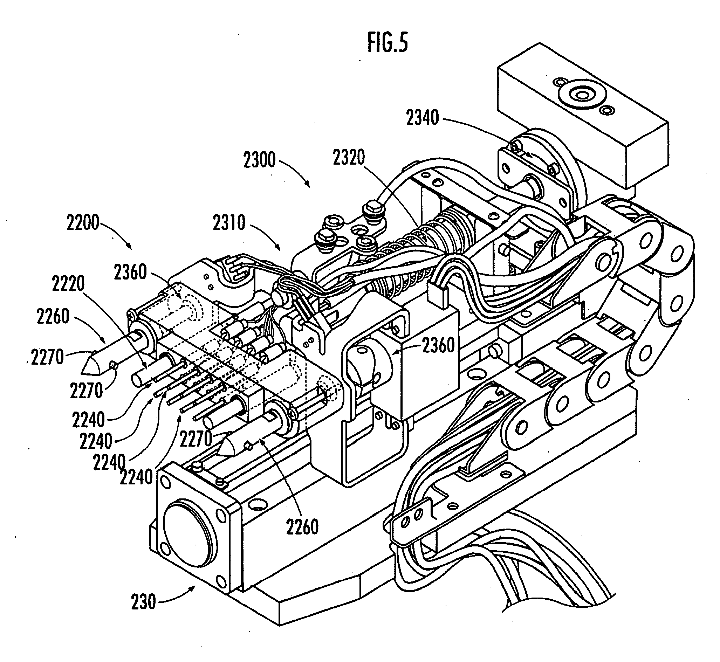

As shown in FIGS. 4 and 5, second charging terminals 2220, terminals 2240 for a first signal, and rods 2260 are provided in parallel in the second connector 2200 so as to protrude in a horizontal direction. A pair of pins 2270 is provided so as to protrude from side walls of each rod 2260. The rod 2260 is attached to the second connector 2200 in a state wherein its radial movement or wobbling is possible by a compliance mechanism.

The connector drive mechanism 2300 is a cylinder-type drive mechanism. As shown in FIG. 5, the connector drive mechanism 2300 includes a foundation 230, a slider 2310 which has the second connector 2200 attached to a distal end thereof, a cylinder rod 2320 which makes the slider 2310 slide and reciprocate on the foundation 230, a compliance mechanism 2340 which holds the cylinder rod 2320 in a state where its radial movement or wobbling is possible, and a rod rotation driving mechanism 2360 which rotates the rod 2260 about an axis. The position of the second connector 2200 is measured on the basis of the amount of driving of the slider 2310 by the cylinder rod 2320. In addition, the second connector 2200 may be driven to advance or retreat in all the directions that the force of a horizontal component acts on the robot 1 at the time of retreat driving in addition to the horizontal direction.

In a state where the first connector 1200 and the second connector 2200 are connected together, the first charging terminals 1220 and the second charging terminals 2220 are connected, the terminals 1240 for a first signal and the terminals 2240 for a second signal are connected, and the rods 2260 are inserted into tubes 1260, and the pins 2270 are engaged with terminal ends of the guides 1270. On the other hand, in a state where the second connector 2200 is disconnected from the first connector 1200, the first charging terminals 1220 and the second charging terminals 2220 are separated from each other, the terminals 1240 for a first signal and the terminals 2240 for a second signal are separated from each other, the pins 2270 are released from the engagement with the terminal ends of the guides 1270, and the rods 2260 are pulled out of the tubes 1260; respectively.

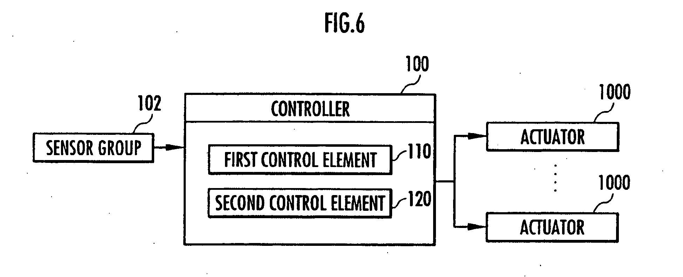

The controller 100 shown in FIG. 6 is constituted by a CPU, a ROM, a RAM, an I/O, etc., and controls the operation of an actuator 1000 according to an action plan stored in a memory unit, on the basis of an output signal from each of sensors which constitute a sensor group 102, thereby controlling the action of the robot 1. The "action plan" is defined by a "target posture orbit" etc. showing a time-series changing mode of the target position of the robot 1, and a "target position track" showing a time-series changing mode of the target posture of the robot 1. In addition to the head camera C₁ and the waist camera C₂, an inclination angle sensor which outputs a signal according to the inclination angle or posture of the body 10 with respect to a horizontal plane, a yaw rate sensor which outputs a signal according to the angular velocity the robot 1 about the yaw axis, an acceleration sensor which outputs a signal according to the acceleration of the robot 1 in the directions of the roll axis, the pitch axis, etc., and a rotary encoder which outputs a signal according to the angle of each joint, etc. are included in the sensor group 102. The position of an origin of a robot coordinate system (X_{R}, Y_{R}, Z_{R}) shown in FIG. 1 in a fixed coordinate system or a global coordinate system (X, Y, Z), or a translation matrix or quaternion showing translation to the position in the fixed coordinate system is measured as the position of the body 10 on the basis of the output of the sensors which constitute the sensor group 102. Additionally, the azimuth angle and elevation angle of a robot coordinate system in the fixed coordinate system in an +Z_{R} direction, or a rotation matrix or quaternion showing the rotation by the azimuth angle and elevation angle in the fixed coordinate system are measured as the posture of the body 10.

The controller 100 includes a first control element 110 which determines whether or not requirements to be described later are satisfied, and a second control element 120 which controls the operation of the robot 1 as described above according to the determined result by the first control element 110. In addition, the controller 100 may be a distributed controller constituted by a main control unit or a plurality of subcontrol units which are connected through an internal network of the robot 1.

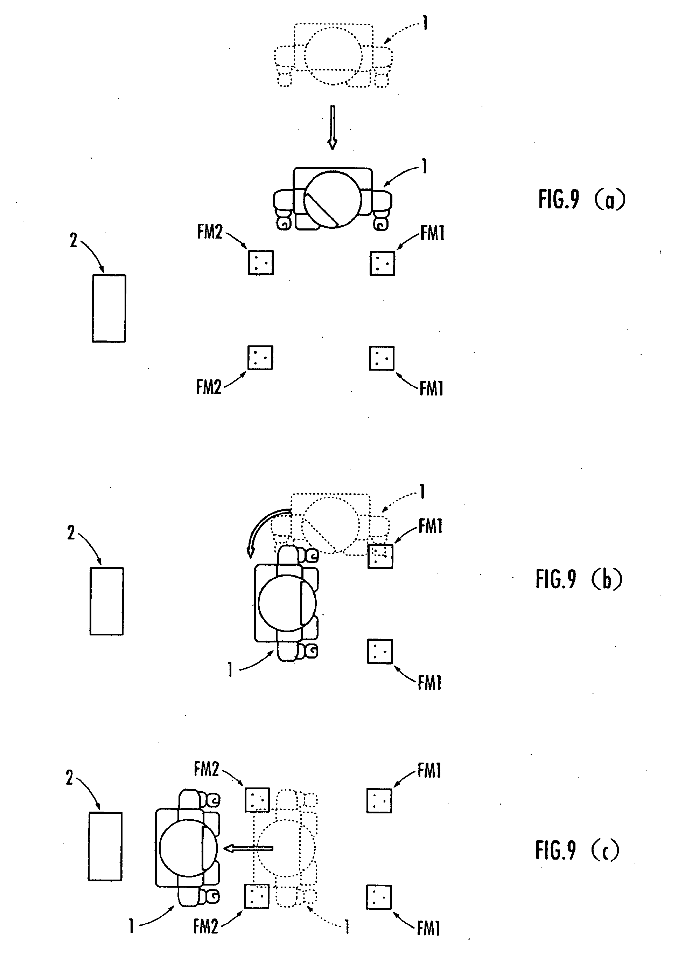

The functions of the robot 1 with the above construction will now be described. The outline of the functions of the robot 1 will be first described. First of all, as shown in FIG. 9A, the robot 1 moves toward a first designated area ahead of the charging installation 2. Further, as shown in FIG. 9B, the robot 1 turns its back to the charging installation 2 and stops in the first designated area. Moreover, as shown in FIG. 9C, the robot 1 stops in a second designated area after having moved backward from the first designated area. Then, the robot 1 stops in the second designated area, and executes a "first designated task" and a "second designated task" in order. The "first designated task" is a task of charging the battery 1100 by the charging installation 2 after the second connector 2200 has been connected to the first connector 1200. The "second designated task" is a task of removing the second connector 2200 from the first connector 1200.

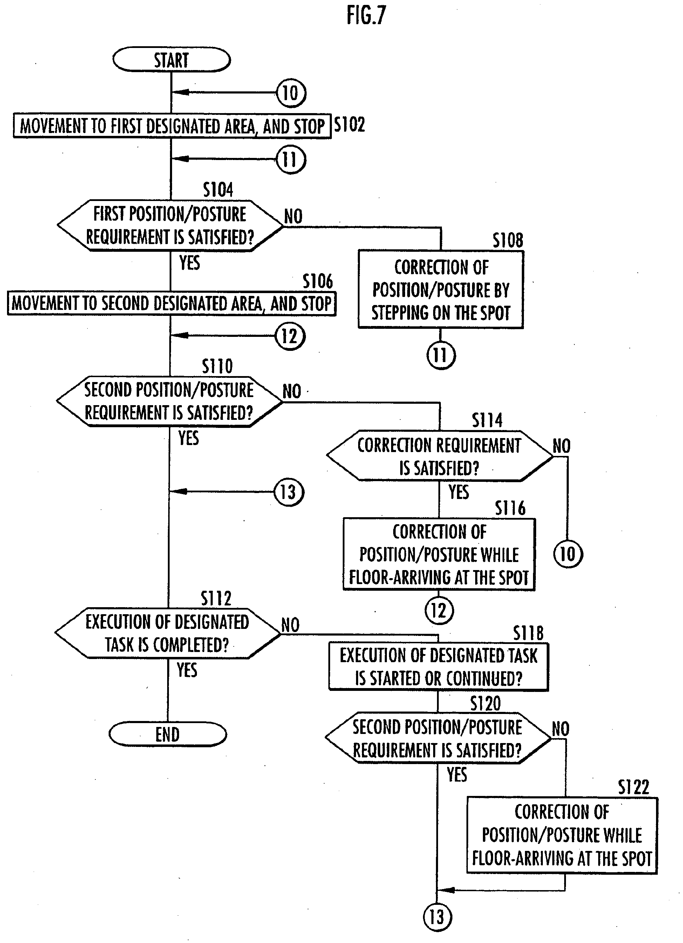

A series of operation functions of the robot 1 will be described in detail. First, when the robot 1 moves toward the first designated area, one or both positions and postures of the floor marks FM₁ and FM₂ are measured on the basis of, for example, an image around imaged by the waist camera C₂, and the action plan is generated on the basis of the measurement results. Then, the operation of the robot 1 including the movement of the leg joint mechanism group is controlled such that the robot 1 moves toward the first designated area as shown in FIG. 9A, and turns its back to the charging installation 2 and stops in the first designated area as shown in FIG. 9B, according to this action plan (FIG. 7/S102). When the robot 1 has stopped, the movement of all the leg joint mechanisms included in the leg joint mechanism group is stopped, while electric power is supplied to the actuator 1000 so that a state where the legs 14 are bent lightly and stand in the knee joint mechanism 143 as shown in FIG. 2 may be maintained.

The first control element 110 determines whether or not a "first position/posture requirement" is satisfied, in a state where the robot 1 has stopped in the first designated area (FIG. 7/S104). The "first position/posture requirement" is a requirement that the position and posture of the body 10 fall within a "first target position range" and a "first target posture range," respectively. The "first target position range" and the "first target posture range" are defined from a viewpoint that the position and posture of the body 10 are adjusted in advance in the first designated area so that the amount of correction of the position or the like of the body 10 in the second designated area may be reduced, and are stored in the memory unit. At this time, the position and posture of the body 1 relative to the first floor mark FM₁ are measured as the position and posture of the body 1. The position and posture of the body 1 relative to the first floor mark FM₁ can be measured on the basis of such a measurement result that is obtained by firstly measuring the position and posture of the first floor mark FM₁ with respect to the waist camera C₂ through the waist camera C₂, and the position, posture, etc. of the waist camera C₂ (or light-receiving element of the waist camera C₂) in the robot coordinate system that were stored in advance in the memory unit. In addition, the position and posture of the body 10 may be measured on the basis of an output signal from the rotary encoder showing the angle of each joint mechanism, and the output from other sensors, such as a value measured according to an inverse-dynamic or geometric computation model on the basis of the length or the like of each link stored in advance in the memory unit. Additionally, whether or not the first position/posture requirement is satisfied may be determined according to whether or not the position and posture of the first floor mark FM₁ which are measured through the waist camera C₂ in a state where the robot 1 has stopped in the first area coincide with the target position and target posture, respectively, of the first floor mark FM₁ stored in the memory unit, or are in a predetermined error range.

If the first control element 110 determines that the first position/posture requirement is not satisfied (FIG. 7/NO in S104), the movement of the leg joint mechanism group is controlled so as to be stopped again in the first designated area, after the robot 1 performs floor-leaving and floor-arriving of a part or all of the plurality of legs 14 in the first designated area (FIG. 7/S108). Hence, the position or the like of the body can be corrected while the robot 1 performs stepping on the spot.

On the other hand, if the first control element 110 determines that the first position/posture requirement is satisfied (FIG. 7/YES in S104), the second processing element 120 controls the movement or the like of the leg joint mechanism group so that the robot 1 may move backward to the second designated area from the first designated area as shown to FIG. 9C, and stop in the second designated area (FIG. 7/S106).

The first control element 110 determines whether or not a "second position/posture requirement" is satisfied, in a state where the robot 1 keeps stopping in the second designated area (FIG. 7/YES in S110). The "second position/posture requirement" is a requirement that the position and posture of the body 10 fall within a "second target position range" and a "second target posture range," respectively. The "second target position range" and the "second target posture range" are defined from a viewpoint that the robot 1 is made to reliably execute a designated task. At this time, the position and posture of the body 10 relative to the second floor mark FM₂ are measured as the position and posture of the body 10. The position and posture of the body 10 relative to the second floor mark FM₂ can be measured on the basis of such a measurement result that is obtained by firstly measuring the position and posture of the second floor mark FM₂ with respect to the waist camera C₂ through the waist camera C₂, and the position, posture, etc. of the waist camera C₂ in the robot coordinate system that were stored in advance in the memory unit. In addition, the position and posture of the body 10 may be measured on the basis of an output signal from the rotary encoder showing the angle of each joint mechanism, and the output from other sensors, such as a value measured according to an inverse-dynamic or geometric computation model on the basis of the length or the like of each link stored in advance in the memory unit. Additionally, whether or not the second position/posture requirement is satisfied may be determined according to whether or not the position and posture of the first floor mark FM₁ which are measured through the waist camera C₂ in a state where the robot 1 has stopped in the first area coincide with the target position and target posture, respectively, of the second floor mark FM₂ stored in the memory unit, or are in a predetermined error range.

If the first control element 110 determines that the second position/posture requirement is not satisfied (FIG. 7/NO in S110), the first control element further determines whether or not a "correction requirement" is satisfied 110 (FIG. 7/S114). The "correction requirement" is a requirement that the second position/posture requirement is satisfied by adjusting the movement of the leg joint mechanism group on the spot while the robot 1 allows the plurality of legs 14 or feet 15 to arrive at a floor, thereby performing correction so that the position and posture of the body 10 may not exceed a "variable position range" and a "variable posture range," respectively. The "variable position range" and the "variable posture range" are defined from a viewpoint that the robot 1 stably maintains its standing state, such that the position of ZMP falls within an allowable range so as not to deviate therefrom.

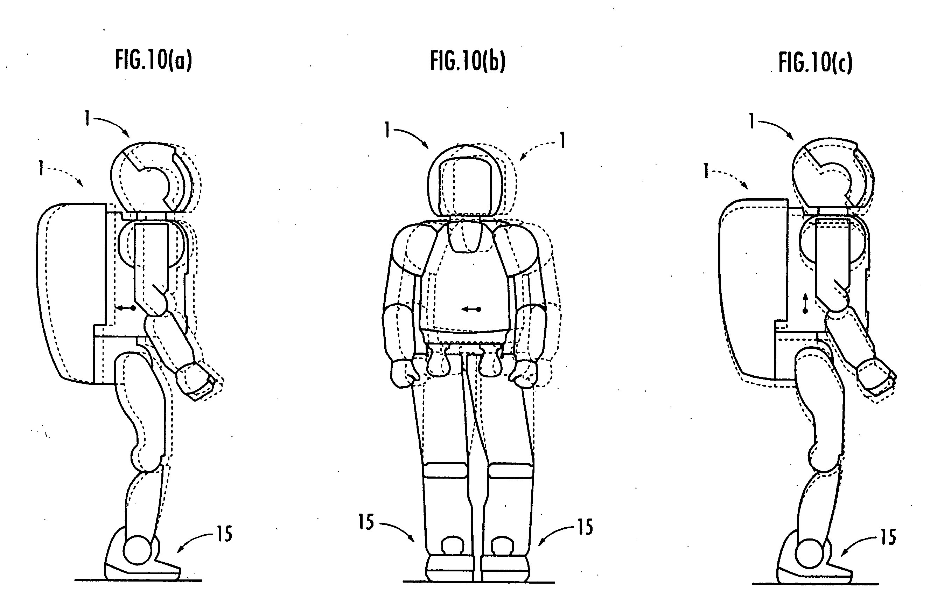

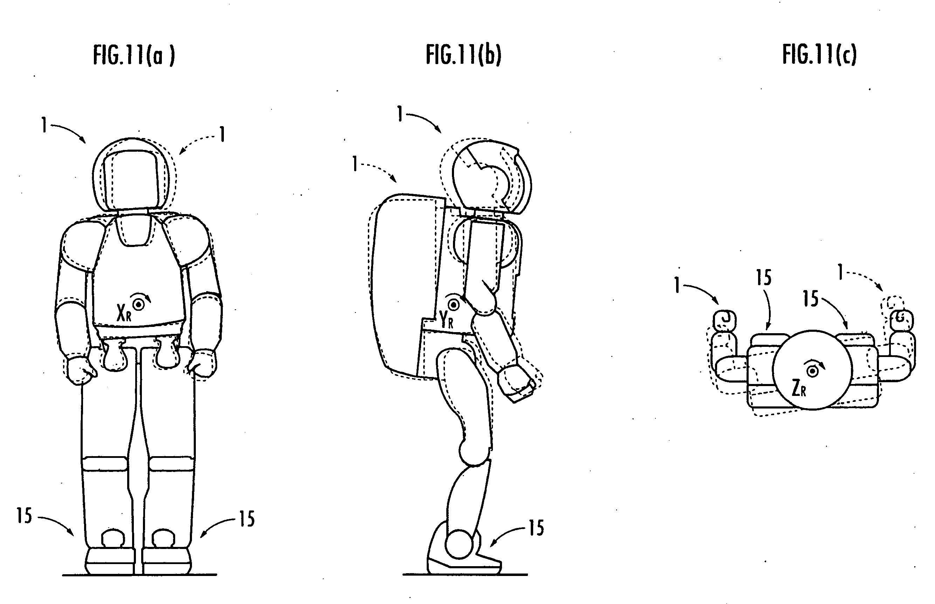

If the first control element 110 determines that the correction requirement is satisfied (FIG. 7/YES in S114), the second control element 120 controls the movement of the leg joint mechanism group so that, while the robot 1 allows the plurality of feet 15 to arrive at a floor, the position or the like of the body 10 may be changed on the spot (FIG. 7/S116). At this time, an action plan including a target joint angle orbit showing a time-series changing mode of a target joint angle about each axis of each joint mechanism is generated, and the movement of each joint mechanism is controlled so that a joint angle orbit may follow this target angle orbit. As a result, as shown in FIGS. 10A to 10C, respectively, the position of the body 10 can be shifted as indicated by arrows in a direction of an X_{R} axis (roll axis), in a direction of a Y_{R} axis (pitch axis), and in a direction of a Z_{R} axis (yaw axis) in a state the foot 15 arrives at the floor. Additionally, as shown in FIGS. 11A to 11C, respectively, the posture of the body 10 can be corrected by the rotations as indicated by arrows around the directions of the roll axis, the pitch axis, and the yaw axis in a state the foot 15 is brought to arriving at the floor.

On the other hand, if the first control element 110 has determined that the correction requirement is not satisfied by (FIG. 7/NO in S114), the second control element 120 controls the movement or the like of the leg joint mechanism group so that the robot 1 may move to the first designated area where the position or the like thereof is suitably corrected, then move to the second designated area, and then stop again in the second designated area (refer to FIG. 7/S102, S106, S108, etc.). In addition, after the robot 1 has moved to an area different from the second designated area, the movement or the like of the leg joint mechanism group may be controlled so that the robot may return to and then stop in the second designated area.

Then, if the first control element 110 determines that the second position/posture requirement is satisfied (FIG. 7/YES in S110), the second control element 120 determines whether or not execution of a designated task is completed (FIG. 7/S112). If it has been determined that the execution of the designated task is not completed (FIG. 7/NO in S112), the controller 100 controls the operation of the robot 1 so that the execution of the designated task may be started or continued (FIG. 7/S118). The first control element 110 determines whether or not the "second position/posture requirement" is satisfied, even during the execution of the designated task by the robot 1 (FIG. 7/S120). In addition, while the robot 1 is executing the designated task, whether or not a requirement that the posture of the body 10 falls within the second target posture range or a requirement that the position of the body 10 falls within the second target position range is satisfied instead of the second position/posture requirement may be determined. Then, if the first control element 110 determines that the second position/posture requirement is not satisfied (FIG. 7/NO in S120), the position or the like of the body 10 etc. is corrected as the second control element 120 controls the movement of the leg joint mechanism group while the robot 1 has allowed the foot 15 to arrive at a floor (FIG. 7/S122). Then, the second control element 120 determines whether or not the execution of a designated task is completed (FIG. 7/S112). If the second control element 110 determines that the second position/posture requirement is satisfied (FIG. 7/YES in S120), the second control element 120 determines whether or not the execution of the designated task is completed (FIG. 7/S112). If it has been determined that the execution of the designated task is completed (FIG. 7/YES in S112), a series of processing mentioned above is completed.

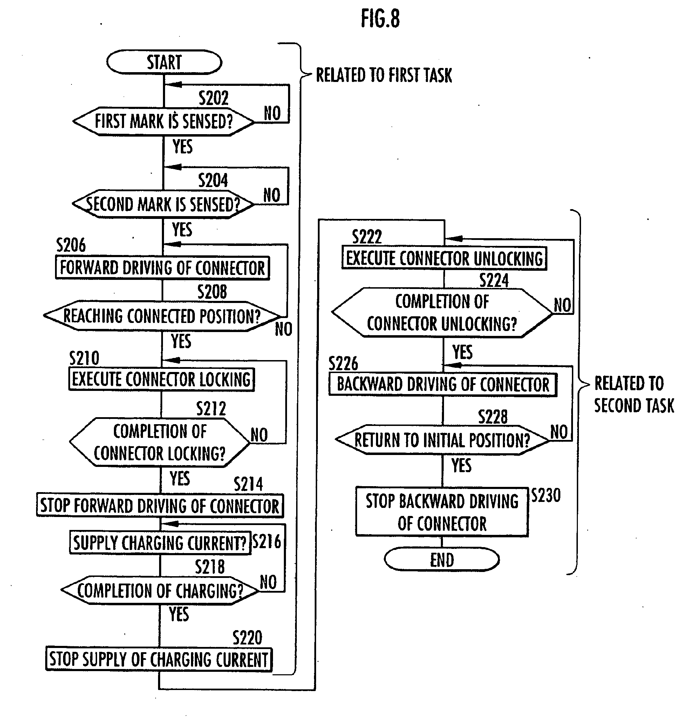

Here, an execution method of a designated task by the robot 1 will be described. It is determined in the charging installation 2 whether or the like the first mark M₁ given to the heel (rear side of the foot 15) of the robot 1 which has stopped in the second designated area has been detected by the first sensor 211 (FIG. 8/YES in S202). Then, under a requirement that the second mark M₂ given to the back of the body 10 of the robot 1 has been detected by the second sensor 212 (FIG. 8/YES in S204), the connector drive mechanism 2300 drives the second connector 2200 forward or drives the second connector in a direction in which the second connector approaches the first connector 1200 (FIG. 8/S206).

Thereafter, under a requirement that the second connector 2200 has reached a connected position in a given amount of time (FIG. 8/YES in S208), connector locking is executed (FIG. 8/S210). When the second connector 2200 is in the connected position, the distal ends of the rods 2260 are inserted into the tubes 1260, and the pins 2270 are guided to the distal ends of the guides 1270. The connector locking is executed as the rods 2260 are rotationally driven in a given direction about an axis by the rod rotation driving mechanism 2360. At this time, the second connector 2200 is driven forward so as to assist in realization of the connector locking. As a result, while the pins 2270 provided so as to protrude from,the side walls of the rods 2260 are guided by the guides 1270 of the tubes 1260, the rods 2260 are gradually inserted into the tubes 1260, and the pins 2270 are engaged with the terminal ends of the guides 1270, thereby realising the connector locking. The second connector 2200 and the first connector 1200 are brought into a connected state by the realization of the connector locking. That is, the second charging terminals 2220 and the first charging terminals 1220 are connected together, and the terminals 2240 for a second signal and the terminals 1240 for a first signal are connected together.

Further, if it has been determined that the connector locking has completed on the basis of the angle of rotation of the rods 2260 by the rod rotation driving mechanism 2360 (FIG. 8/YES in S212), the forward driving of the second connector 2200 is stopped (FIG. 8/S214). Further, the charge controller 200 communicates with the controller 100 via the terminals 1240 for a first signal and the terminals 2240 for a second signal, thereby supplying a charging current to the battery 1100 via the first charging terminals 1220 and the second charging terminals 2220 from the power source 2100 for charging, recognizing the residual capacity or the like of the battery 1100 (FIG. 8/S216). Then, under a requirement that the charge controller 200 has determined on the basis of an output signal from the controller 100 that the charging of the battery 1100 has been completed (FIG. 8/YES in S218), the supply of an electric current to the battery 1100 from the power source 2100 for charging is stopped (FIG. 8/S220). In this step, the robot 1 executes the "first designated task" that the battery 1100 is charged by the charging installation 2 after having connected the second connector 2200 to the first connector 1200.

Subsequently, connector unlocking is executed (FIG. 8/S222). At this time, the rods 2260 are rotationally driven about an axis in a direction opposite to a direction at the time of connector locking driving by the rod rotation driving mechanism 2360. Further, the second connector 2200 may be driven backward so as to assist in realization of the connector unlocking. As a result, while the pins 2270 provided so as to protrude from the side walls of the rods 2260 are guided by the guides 1270 of the tubes 1260, the rods 2260 are pulled out of the tubes 1260, thereby realizing the connector unlocking. By the realization of the connector unlocking, the first charging terminals 1220 and the second charging terminals 2220 are separated from each other, and the terminals 1240 for a first signal and the terminals 2240 for a second signal are separated from each other, whereby the second connector 2200 is removed from the first connector 1200.

Further, under a requirement that it has been determined on the basis of the angle of rotation of the rod 2260 by the rod rotation driving mechanism 2360 that the connector unlocking have been realized (FIG. 8/YES in S224), the second connector 2200 is driven backward by the connector drive mechanism 2300 (FIG. 8/S226). Then, under a requirement that it have been determined that the second connector 2200 has returned to its initial position (FIG. 8/YES in S228), the backward driving of the second connector 2200 is stopped (FIG. 8/S230). In this step, the robot 1 executes the "second designated task" that the second connector 2200 is removed from the first connector 1200.

According to the robot 1 which exhibits the above functions, while the robot 1 had allowed each foot 15 to arrive at a floor, the movement of the leg joint mechanism group is controlled on the spot under a requirement the "second position/posture requirement" is satisfied in a state where the robot has stopped in the second designated area. Thereby, the position or the like of the body 10 can be adjusted (refer to FIG. 7/YES in S110, 116, FIG. 10, and FIG. 11). Accordingly, in a case where the position or the like of the body 10 is unsuitable from a viewpoint that the robot 1 execute designated tasks, such as the first designated task and the second designated task, the robot 1 can execute the designated tasks after the position or the like of the body 10 is suitably executed on the spot in the second designated area (refer to FIG. 7/S118). In addition, factors that the second position/posture requirement is no longer satisfied when the robot has stopped in the second designated area include some asymmetry properties of operating characteristics of the robot 1, such as the inclination angle or existence of irregularities, of a floor where the robot 1 is standing, the inclination angle of a floor while the robot 1 is moving to the second designated area from the first designated area, the variation of a coefficient of friction, and the elastic property of the elastic material 152 of the right and left feet 15 of the robot 1.

Additionally, the position or the like of the body 10 can be suitably corrected in the second designated area by controlling the movement of the leg joint mechanism group in a state where the robot allowed each foot 15 to arrive at a floor so that the second position/posture requirement may be satisfied even while the robot 1 executes the designated task (refer to FIG. 7/S120, and S122). Accordingly, the position or the like of the body 10 can be corrected and a designated task can be continued and executed, as mentioned above, even in a case where the second position/posture requirement is no longer satisfied due to any disturbance generated after the start of execution of the designated task.

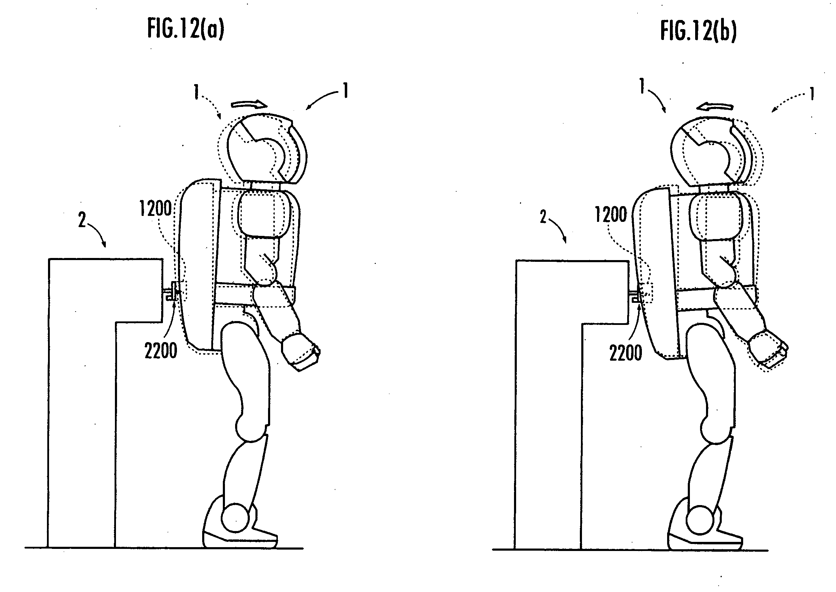

For example, as shown in FIG. 12A, a situation where the robot 1 is pushed forward toward the second connector 2200 and its posture is collapsed a little is considered for the reasons that the rods 2260 are exactly inserted into the tubes 1260 while the robot 1 executes the first designated task. In this situation, the robot 1 can modify the position or the like of the body 10 by moving some or all of the leg joint mechanism group delicately while the robot allowed each foot 15 to arrive at a floor in the second designated area (refer to FIGS. 10 and 11). Also, the first designated task that the second connector 2200 is connected to the first connector 1200 and the battery 1100 is charged by the charging installation 2 can be executed.

Additionally, as shown in FIG. 12B, a situation where the robot 1 is pulled backward toward the second connector 2200 and its posture is collapsed a little is considered for the reasons that the rods 2260 are caught on the tubes 1260 although the connector locking has succeeded while the robot 1 executes the second designated task. In this situation, the robot 1 can modify the position or the like of the body 10 by moving some or all of the leg joint mechanism group delicately while the robot allowed each foot 15 to arrive at a floor in the second designated area (refer to FIGS. 10 and 11). Also, the second designated task that the second connector 2200 is removed from the first connector 1200 can be executed by making the charging installation 2 drive the second connector 2200. Moreover, the position or the like of the body 10 is corrected by controlling the movement of the leg joint mechanism group on the spot while the robot 1 allowed each foot to arrive at a floor, under a requirement that it has been determined that the "correction requirement" is satisfied in addition to the second position/posture requirement (refer to FIG. 7/YES in S114, and S116). Accordingly, the position or the like of the body 10 can be appropriately corrected from the viewpoint of execution of a designated task in the second designated area with each foot 15 arriving at the floor while avoiding a situation where a standing state of the robot 1 becomes unstable.

Additionally, in a case where it has been determined that the "correction requirement" is not satisfied, that is, in a case where a state where the robot 1 is standing may become unstable if the position or the like of the body 10 is corrected on the spot while the robot 1 allowed each foot 15 to arrive at a floor, the robot 1 once moves to the first designated area (other areas) from the second designated area, and corrects the position or the like of the body 10. Then, the robot 1 moves to the second designated area again, and stops there (refer to FIG. 7/NO in S114, S104, S106, S108, and FIG. 9B and 9C). As a result, the position or the like of the body 10 in the second designated area can be changed so that the correction requirement may be satisfied. In addition, the position or the like of the body 10 can be suitably corrected from the viewpoint of execution of a designated task in the second designated area, avoiding a situation where a state where the robot is standing becomes unstable, while the robot 1 allowed each foot 15 to arrive at a floor (refer to FIG. 7/YES in S114, and S116). In addition, in a case where it has been determined that the "correction requirement" is not satisfied in a state where the robot 1 has stopped in the second designated area, the operation of the robot 1 may be controlled so that the robot may perform stepping in the second designated area. Even in this case, the position or the like of the body 10 in the second designated area can be changed so that the correction requirement may be satisfied.

Moreover, the robot 1 has moved to the second designated area from the first designated area, and then stops there, under a requirement that the "first position/posture requirement" is satisfied (FIG. 7/YES in S104, and S106). Accordingly, the position or the like of the body 10 in the first designated area can be suitably corrected in advance from a viewpoint that the robot 1 reduces the amount of correction, such as the position of the body 10 in the second designated area, and smoothly executes a designated task.

Additionally, if it has been determined that the "first position/posture requirement" is not satisfied, the robot 1 operates so as to perform stepping on the spot (refer to FIG. 7/NO in S104, and S108). As a result, the robot 1 can change the position or the like of the body 10 in the first designated area so that the first position/posture requirement may be satisfied. Accordingly, when the robot 1 has moved to the second designated area from the first designated area, the position or the like of the body 10 in the first designated area can be suitably corrected in advance from a viewpoint that the robot reduces the amount of correction, such as the position of the body 10 in the first designated area, and smoothly executes a designated task.

In addition, the robot 1 may execute various designated tasks different from the first designated task and the second designated task. In order to execute any kind of designated task, as mentioned above, the robot 1 can execute the designated task after the position or the like of the body 10 is suitably modified, while the robot allowed each foot 15 to arrive at a floor in the second designated area.

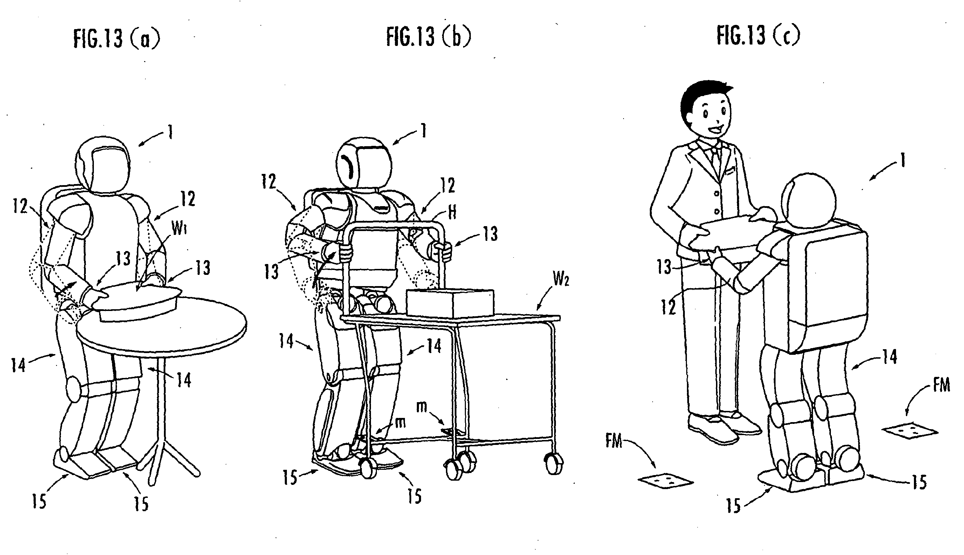

For example, as shown in FIG. 13A, as the robot 1 moves the arms 12 or the like in a state where the robot has stopped in the second designated area, the robot may execute a designated task of gripping a tray (target object) W₁ with the hands 13. The robot 1 determines whether or not the second position/posture requirement is satisfied according to whether or not the position and posture of the tray W₁ coincide with a reference position and a reference posture stored in the memory unit, after the robot has recognized the position and posture of the tray W₁ on the basis of an image of the tray W₁ obtained through the head camera C₁. Additionally, as shown in FIG. 13B, as the robot 1 moves the arms 12 or the like in a state where the robot has stopped in the second designated area, the robot may execute a designated task of gripping a handle (target object) H or the like of a carriage W₂. The robot 1 determines whether or not the second position/posture requirement is satisfied according to whether or not the position and posture of the carriage W₂ coincide with a reference position and a reference posture stored in the memory unit, after the robot has recognized the position and posture of the carriage W₂ on the basis of an image given to the lower side of the carriage W₂ obtained through the waist camera C₂. In this case, a situation where the position or the like of a target object has deviated slightly from its original position at a stage where the robot stopped in the second designated area, or where the position or the like of the target object has deviated slightly from its original position due to the fact that the hands 13 have contacted the target object during execution of a designated task, is assumed. However, even under this situation, as mentioned above, the robot 1 can execute the designated task after the position or the like of the body 10 with respect to the target object is suitably modified, while the robot allowed each foot 15 to arrive at a floor in the second designated area.

Additionally, as shown in FIG. 13C, as the robot 1 moves the arms 12 or the like in a state where the robot has stopped in the second designated area, the robot may execute a designated task of handing a target object, such as the tray W₁ gripped by the hands 13, to a human being or the other robot 1. The robot 1 determines whether or not the second position/posture requirement is satisfied according to whether or not the position and posture of the tray W₁ coincide with a reference position and a reference posture stored in the memory unit, after the robot has recognized the position and posture of the floor mark FM on the basis of an image of the floor mark FM obtained through the waist camera C₂. However, a situation where the position or the like of a human being or the other robot 1 has deviated slightly from its original position at a stage where the robot has stopped in the second designated area, or where the position or the like of the body 10 has changed slightly due to the fact that the human being or the other robot 1 pulls the target object in a state where the robot 1 grips the target object with the hands 13, is assumed. However, even under this situation, as mentioned above, the robot 1 can execute the designated task after the position or the like of the body 10 with respect to the human being or the other robot 1 is suitably modified, while the robot allowed each foot 15 to arrive at a floor in the second designated area.

## Claims

1. A robot comprising a body (10), a plurality of legs (14) connected with the body, respectively, via a first leg joint mechanism (141) and having a second leg joint mechanism (143), respectively, and a controller (100), the robot being autonomously movable with repetition of causing of the plurality of legs (14) thereof to perform a floor-leaving and a floor-arriving as a movement of a leg joint mechanism group which includes the first leg joint mechanism (141) and the second leg Joint mechanism (143) is controlled by the controller (100),
**characterised in that** the controller (100) comprises:
a first control element (110) which determines whether or not a second position/posture requirement is satisfied that a position and a posture of the body (10) fall within a second target position range and a second target posture range, respectively, which are defined from a viewpoint that the robot is urged to execute a designated task, in a state where the robot is in standstill in a second designated area which is an execution area of the designated task accompanied by an interaction with a target object, and which, if the determination is that the second position/posture requirement is not satisfied, further determines whether or not a correction requirement is satisfied that the second position/posture requirement is satisfied by executing a correction such that the position and posture of the body (10) may not exceed a variable position range and a variable posture range, respectively, which are defined from a viewpoint such that the robot is permitted to stably stand, depending on the movement of the leg joint mechanism group while the robot permits the plurality of legs (14) to be kept arrived at a floor; and
a second control element (120) which controls the movement of the leg joint mechanism group to change the position, posture, or position and posture of the body (10) while the plurality of legs (14) are kept arrived at a floor, under a requirement that the first control element (110) determines that the second position/posture requirement has not yet been satisfied and that the correction requirement is satisfied.

2. The robot according to Claim 1, further comprising a plurality of feet (15) as floor-arriving portions of the plurality of legs (14), which are respectively connected to ends of the plurality of legs via a third leg joint mechanism (145),
wherein the second control element (120) controls the movement of the leg joint mechanism group including the third leg joint mechanism (145) in addition to the first leg joint mechanism (141) and the second leg joint mechanism (143).

3. The robot according to Claim 1 or 2,
wherein the second control element (120) controls the movement of the leg joint mechanism group so as to be stopped again in the second designated area, after the robot has executed the floor-leaving and the floor-arriving of a part or all of the plurality of legs (14) in the second designated area from a state where the robot keeps standstill thereof in the second designated area, under a requirement that the first control element (110) determines that the second position/posture requirement and the correction element are not satisfied.

4. The robot according to Claim 1 or 2,
wherein the second control element (120) controls the movement of the leg joint mechanism group so that, after the robot has moved from the second designated area to another area, the robot is then moved to a standstill again there, under a requirement that the first control element (110) has determined that the second position/posture requirement and the correction element are not still satisfied.

5. The robot according to any one of Claims 1 to 4,
wherein the first control element (110) determines whether or not a first position/posture requirement is satisfied that the position and posture of the body fall within a first target position range and a first target posture range, respectively, which are defined from a viewpoint such that the position and posture of the body (10) are adjusted in advance in a first designated area so that an amount of correction of the position, posture, or the position and posture of the body (10) in the second designated area may be reduced, in a state where the robot is in standstill in the first designated area different from the second designated area, and
the second control element (120) controls a movement of the leg joint mechanism group so that the robot comes to standstill after the robot has moved from the first designated area to the second designated area, under a requirement that the first control element (110) has determined that the first position/posture requirement is satisfied.

6. The robot according to Claim 5,
wherein the second control element (120) controls the movement of the leg joint mechanism group so that, after the robot has executed the floor-leaving and floor-arriving of a part or all of the plurality of legs (14) in the first designated area from a state where the robot is in standstill in the first designated area, the robot comes to stop again in the first designated area, under a requirement such that the first control element has determined that the first position/posture requirement is not still satisfied.

7. The robot according to any one of Claims 1 to 6, further comprising a battery (1100) and a first connector (1200),
wherein a task of connecting a second connector (2200) behaving as the target object and driven by a drive source provided for a charging installation (2), to the first connector (1200), and of charging the battery (1100) by the charging installation (2), is executed as the designated task.

8. The robot according to Claim 7,
wherein a task of driving the second connector (2200) by the drive source of the charging installation (2) in a state where the first and the second connectors (1200,2200) are connected together, thereby removing the second connector (2200) from the first connector (1200), is executed as the designated task.

9. The robot according to any one of Claims 1 to 8. further comprising an arm (12) articulated to the body (10) via a first arm joint mechanism (121) and capable of being bent and stretched by a second arm joint mechanism (123), and a hand (13) articulated to an end of the arm (12) via a third arm joint (125),
wherein the robot executes a task of gripping the target object by the hand as the designated task.

10. The robot according to Claim 9,
wherein a task of handing the target object gripped by the hand to a human being or another robot is executed as the designated task.

## Patentansprüche

1. Roboter, umfassend
einen Körper (10),
eine Mehrzahl von Beinen (14), die mit dem Körper jeweils mittels eines ersten Beingeienkmechanismus (141) verbunden sind und jeweils einen zweiten Beingelenkmechanismus (143) aufweisen, und
eine Regel-/Steuereinrichtung (100),
wobei der Roboter autonom beweglich ist, indem er wiederholt bewirkt, dass die Mehrzahl von Beinen (14) davon, ein Boden-Verlassen und ein Boden-Ankommen ausführt, wenn eine Bewegung einer Beingelenkmechanismus-Gruppe, welche den ersten Beingelenkmechanismus (141) und den zweiten Beingelenkmechanismus (143) umfasst, durch die Regel-/Steuereinrichtung (100) geregelt/gesteuert ist,
**dadurch gekennzeichnet,**
**dass** die Regel-/Steuereinrichtung (100) umfasst:
ein erstes Regel-/Steuerelement (110), welches bestimmt, ob eine zweite Positions-/Stellungsbedingung, dass eine Position und eine Stellung des Körpers (10) innerhalb eines zweiten Zielpositionsbereiches beziehungsweise eines zweiten Zielstellungsbereiches liegt, erfüllt ist oder nicht, welche unter einem Gesichtspunkt definiert sind, dass der Roboter angetrieben wird, eine bestimmte Aufgabe auszuführen in einem Zustand, in welchem der Roboter in einem Stillstand in einem zweiten bestimmten Bereich ist, welcher ein Ausführungsbereich der durch eine Interaktion mit einem Zielobjekt begleiteten, bestimmten Aufgabe ist, und
welcher, falls die Bestimmung derart ist, dass die zweite Positions-/Stellungsbedingung nicht erfüllt ist, ferner bestimmt, ob eine Korrekturbedingung erfüllt ist oder nicht, dass die zweite Positions-/Stellungsbedingung durch Ausführen einer Korrektur erfüllt ist, derart, dass die Position und die Stellung des Körpers (10) einen variablen Positionsbereich beziehungsweise einen variablen Stellungsbereich nicht überschreiten dürfen, welche unter einem Gesichtspunkt derart definiert sind, dass dem Roboter ermöglicht wird, stabil zu stehen, in Abhängigkeit von der Bewegung der Beingelenkmechanismus-Gruppe, während der Roboter der Mehrzahl von Beinen (14) ermöglicht, an einem Boden angekommen gehalten zu werden; und
ein zweites Regel-/Steuerelement (120), welches die Bewegung der Beingelenkmechanismus-Gruppe regelt/steuert, um die Position, die Stellung oder die Position und die Stellung des Körpers (10) zu ändern, während die Mehrzahl von Beinen (14) an einem Boden angekommen gehalten werden, unter einer Bedingung, dass das erste Regel-/Steuerelement (110) bestimmt, dass die zweite Positions-/Stellungsbedingung noch nicht erfüllt ist und dass die Korrekturbedingung erfüllt ist.

2. Roboter nach Anspruch 1, ferner umfassend:
eine Mehrzahl von Füßen (15), als Boden-ankommende Abschnitte der Mehrzahl von Beinen (14), welche jeweils mit Enden der Mehrzahl von Beinen mittels eines dritten Beingelenkmechanismus (145) verbunden sind,
wobei das zweite Regel-/Steuerelement (120) die Bewegung der Beingelenkmechanismus-Gruppe regelt/steuert, welche zusätzlich zum ersten Beingelenkmechanismus (141) und zweiten Beingelenkmechanismus (143), den dritten Beingelenkmechanismus (145) umfasst.

3. Roboter nach Anspruch 1 oder 2,
wobei das zweite Regel-/Steuerelement (120) die Bewegung der Beingelenkmechanismus-Gruppe derart regelt/steuert, dass diese im zweiten bestimmten Bereich erneut gestoppt ist, nachdem der Roboter das Boden-Verlassen und das Boden-Ankommen eines Teils oder allen von der Mehrzahl von Beinen (14) im zweiten bestimmten Bereich aus einem Zustand ausgeführt hat, in welchem der Roboter in dem zweiten bestimmten Bereich in einem Stillstand desselben ist, unter einer Bedingung, dass das erste Regel-/Steuerelement (110) bestimmt, dass die zweite Positions-/Stellungsbedingung und das Korrekturelement nicht erfüllt sind.

4. Roboter nach Anspruch 1 oder 2,
wobei das zweite Regel-/Steuerelement (120) die Bewegung der Beingelenkmechanismus-Gruppe derart regelt/steuert, dass nachdem der Roboter sich aus dem zweiten bestimmten Bereich zu einem anderen Bereich bewegt hat, der Roboter dann erneut dort zu einem Stillstand bewegt wird, unter einer Bedingung, dass das erste Regel-/Steuerelement (110) bestimmt hat, dass die zweite Positions-/Stellungsbedingung und das Korrekturelement immer noch nicht erfüllt sind.

5. Roboter nach einem der Ansprüche 1 bis 4,
wobei das erste Regel-/Steuerelement (110) bestimmt, ob eine erste Positions-/Stellungsbedingung erfüllt ist oder nicht, dass die Position und die Stellung des Körpers innerhalb eines ersten Zielpositionsbereiches beziehungsweise eines erstens Zielstellungsbereiches liegt, die unter einem Gesichtspunkt derart definiert sind, dass die Position und die Stellung des Körpers (10) im Voraus in einem ersten bestimmten Bereich angepasst sind, so dass ein Betrag der Korrektur der Position, der Stellung oder der Position und der Stellung des Körpers (10) im zweiten bestimmten Bereich reduziert werden kann, in einem Zustand, in welchem der Roboter im Stillstand im ersten bestimmten Bereich ist, welcher sich von dem zweiten bestimmten Bereich unterscheidet, und
das zweite Regel-/Steuerelement (120) eine Bewegung der Beingelenkmechanismus-Gruppe derart regelt-/steuert, dass der Roboter zum Stillstand kommt; nachdem der Roboter sich vom ersten bestimmten Bereich zum zweiten bestimmten Bereich bewegt hat, unter einer Bedingung, dass das erste Regel-/Steuerelement (110) bestimmt hat, dass die erste Positions-/Stellungsbedingung erfüllt ist.

6. Roboter nach Anspruch 5,
wobei das zweite Regel-/Steuerelement (120) die Bewegung der Beingelenkmechanismus-Gruppe derart regelt-/steuert, dass nachdem der Roboter das Boden-Verlassen und das Boden-Ankommen eines Teils oder von allen der Mehrzahl von Beinen (14) im ersten bestimmten Bereich aus einem Zustand, in welchem der Roboter im ersten bestimmten Bereich im Stillstand ist, ausgeführt hat, der Roboter erneut im ersten bestimmten Bereich anhält, unter einer Bedingung, derart dass das erste Regel-/Steuerelement bestimmt hat, dass die erste Positions-/Stellungsbedingung immer noch nicht erfüllt ist.

7. Roboter nach einem der Ansprüche 1 bis 6,
ferner umfassend eine Batterie (1100) und einen ersten Anschluss (1200), wobei eine Aufgabe des Verbindens eines zweiten Anschlusses (2200), der sich als das Zielobjekt verhält und durch eine für eine Aufladeinstallation (2) bereitgestellte Antriebsquelle angetrieben ist, mit dem ersten Anschluss (1200), und des Ladens der Batterie (1100) durch die Aufladeinstallation (2), als die bestimmte Aufgabe ausgeführt wird.

8. Roboter nach Anspruch 7,
wobei eine Aufgabe des Antreibens des zweiten Anschlusses (2200) durch die Antriebsquelle der Aufladeinstallation (2) in einem Zustand, in welchem der erste (1200) und der zweite (2200) Anschluss miteinander verbunden sind, wobei dabei der zweite Anschluss (2200) vom ersten Anschluss (1200) entfernt wird, als die bestimmte Aufgabe ausgeführt wird.

9. Roboter nach einem der Ansprüche 1 bis 8, ferner umfassend einen Arm (12), welcher mit dem Körper (10) mittels eines ersten Armgelenkmechanismus (121) gelenkig verbunden ist, und imstande ist, durch einen zweiten Armgelenkmechanismus (123) gebeugt und gestreckt zu werden, und
eine Hand (13), welche mit einem Ende des Arms (12) mittels eines dritten Armgelenks (125) gelenkig verbunden ist,
wobei der Roboter eine Aufgabe des Greifens des Zielobjektes mittels der Hand, als die bestimmte Aufgabe ausführt.

10. Roboter nach Anspruch 9,
wobei eine Aufgabe des Reichens des von der Hand ergriffenen Zielobjektes an einen menschlichen Wesen oder an einen anderen Roboter, als die bestimmte Aufgabe ausgeführt wird.

## Revendications

1. Robot comprenant un corps (10), une pluralité de jambes (14) raccordées avec le corps, respectivement, via un premier mécanisme d'articulation de jambe (141) et ayant un second mécanisme d'articulation de jambe (143), respectivement, et un contrôleur (100), le robot étant mobile de manière autonome en amenant de manière répétée sa pluralité de jambes (14) à réaliser un mouvement de départ du sol et un mouvement d'arrivée sur le sol en tant que mouvement d'un groupe de mécanismes d'articulation de jambe qui comprend le premier mécanisme d'articulation de jambe (141) et le second mécanisme d'articulation de jambe (143) est contrôlé par le contrôleur (100),
**caractérisé en ce que** le contrôleur (100) comprend :
un premier élément de commande (110) qui détermine si une seconde demande de position/posture est satisfaite ou pas de sorte qu'une position et une posture du corps (10) se trouvent dans une seconde plage de positions cibles et une seconde plage de postures cibles respectivement, qui sont définies du point de vue que le robot est poussé à exécuter une tâche désignée, dans un état dans lequel le robot est immobile dans une seconde zone désignée qui est une zone d'exécution de la tâche désignée accompagnée par une interaction avec un objet cible, et qui, si la détermination détermine que la seconde exigence de position/posture n'est pas satisfaite, détermine en outre si une demande de correction est satisfaite ou pas de sorte que la seconde demande de position/posture est satisfaite en exécutant une correction de sorte que la position et la posture du corps (10) ne peuvent pas dépasser une plage de positions variables et une plage de postures variables, respectivement, qui sont définies du point de vue que le robot est autorisé à se tenir droit de manière stable, en fonction du mouvement du groupe de mécanismes d'articulation de jambe alors que le robot permet à la pluralité de jambes (14) d'être maintenues arrivées sur un sol ; et
un second élément de commande (120) qui commande le mouvement du robot de mécanisme d'articulation de jambe pour modifier la position, la posture, ou la position et la posture du corps (10) alors que la pluralité de jambes (14) est maintenue arrivée sur un sol, sous une condition dans laquelle le premier élément de commande (110) détermine que la seconde demande de position/posture n'a pas encore été satisfaite et que la demande de correction est satisfaite.

2. Robot selon la revendication 1, comprenant en outre une pluralité de pieds (15) en tant que parties arrivant sur le sol de la pluralité de jambes (14), qui sont respectivement raccordés aux extrémités de la pluralité de jambes via un troisième mécanisme d'articulation de jambe (145),
dans lequel le second élément de commande (120) commande le mouvement du groupe de mécanismes d'articulation de jambe comprenant le troisième mécanisme d'articulation de jambe (145) en plus du premier mécanisme d'articulation de jambe (141) et du deuxième mécanisme d'articulation de jambe (143).

3. Robot selon la revendication 1 ou 2,
dans lequel le second élément de commande (120) commande le mouvement du groupe de mécanismes d'articulation de jambe afin d'être à nouveau arrêté dans la seconde zone désignée, après que le robot a exécuté le mouvement de départ du sol et le mouvement d'arrivée au sol d'une partie ou de toute la pluralité de jambes (14) dans la seconde zone désignée à partir d'un état dans lequel le robot est maintenu immobile dans la seconde zone désignée, sous la condition que le premier élément de commande (110) détermine que la seconde demande de position/posture et l'élément de correction ne sont pas satisfaits.

4. Robot selon la revendication 1 ou 2, dans lequel le second élément de commande (120) commande le mouvement du groupe de mécanismes d'articulation de jambe de sorte que, après que le robot est passé de la seconde zone désignée à une autre zone, le robot passe ensuite à une position à nouveau immobile, sous la condition que le premier élément de commande (110) a déterminé que la seconde demande de position/posture et l'élément de correction n'ont pas encore été satisfaits.

5. Robot selon l'une quelconque des revendications 1 à 4,
dans lequel le premier élément de commande (110) détermine si une première demande de position/posture a été satisfaite ou pas de sorte que la position et la posture du corps se trouvent dans une première plage de positions cibles et une première plage de postures cibles, respectivement, qui sont définies du point de vue que la position et la posture du corps (10) sont ajustées à l'avance dans une première zone désignée de sorte qu'une quantité de correction de la position, posture ou de la position et de la posture du corps (10) dans la seconde zone désignée peut être réduite, dans un état dans lequel le robot est immobile dans la première zone désignée, différente de la seconde zone désignée, et
le second élément de commande (120) commande un mouvement du groupe de mécanismes d'articulation de jambe de sorte que le robot devient immobile après que le robot est passé de la première zone désignée à la seconde zone désignée sous la condition dans laquelle le premier élément de commande (110) a déterminé que la première demande de position/posture est satisfaite.

6. Robot selon la revendication 5, dans lequel le second élément de commande (120) commande le mouvement du groupe de mécanismes d'articulation de jambe de sorte que, après que le robot a réalisé le mouvement de départ du sol et le mouvement d'arrivée au sol d'une partie ou de la totalité de la pluralité de jambes (14) dans la première zone désignée à partir d'un état dans lequel le robot est immobile dans la première zone désignée, le robot s'arrête à nouveau dans la première zone désignée, dans une condition dans laquelle le premier élément de commande a déterminé que la première demande de position/posture n'est pas encore satisfaite.

7. Robot selon l'une quelconque des revendications 1 à 6, comprenant en outre une batterie (1100) et un premier connecteur (1200),
dans lequel une tâche consistant à raccorder un second connecteur (2200) se comportant comme l'objet cible et entraîné par une source d'entraînement prévue pour une installation de chargement (2), au premier connecteur (1200) et pour charger la batterie (1100) par l'installation de chargement (2), est exécutée comme étant la tâche désignée.

8. Robot selon la revendication 7, dans lequel une tâche consistant à entraîner le second connecteur (2200) par la source d'entraînement de l'installation de chargement (2) dans un état dans lequel les premier et second connecteurs (1200, 2200) sont raccordés ensemble, retirant ainsi le second connecteur (2200) du premier connecteur (1200), est réalisée comme étant la tâche désignée.

9. Robot selon l'une quelconque des revendications 1 à 8, comprenant en outre un bras (12) articulé au corps (10) via un premier mécanisme d'articulation de bras (121) et pouvant être fléchi et étiré par un second mécanisme d'articulation de bras (123), et une main (13) articulée à une extrémité du bras (12) via une troisième articulation de bras (125),
dans lequel le robot exécute une tâche consistant à saisir l'objet cible par la main en tant que tâche désignée.

10. Robot selon la revendication 9, dans lequel une tâche consistant à manipuler l'objet cible saisi par la main à un être humain ou un autre robot est exécutée en tant que tâche désignée.
